# EUROPEAN PATENT APPLICATION

(11) **EP 4 362 502 A1**
(43) Date of publication of application: **01.05.2024**
(21) Application number: 22203645.1
(22) Date of filing: 25.10.2022
(51) Int. Cl.: H04S 7/00, H04R 3/00, G06F 3/16, H04M 9/08, H04M 3/56, H04R 5/033, H04R 5/04

(54) **CONTROLLING LOCAL RENDERING OF REMOTE ENVIRONMENTAL AUDIO**

(71) Applicant: Nokia Technologies Oy, 02610 Espoo (FI)
(72) Inventor: TAMMI, Mikko Tapio, 33310 Tampere (FI); MÄKINEN, Toni, 33950 Pirkkala (FI); JÄRVINEN, Roope Olavi, 37550 Lempäälä (FI); VÄÄNÄNEN, Riitta Elina, 00250 Helsinki (FI)
(74) Representative: Nokia EPO representatives

(57) **Abstract**

An apparatus comprising means for: controlling rendering of first environmental audio captured from an environment of a first user to a second user in dependence upon second environmental audio that is being captured from an environment of the second user.

## Description

### TECHNOLOGICAL FIELD

Examples of the disclosure relate to control of local rendering of remote environmental audio.

### BACKGROUND

In some situations it can be desirable for a person to be able to listen to audio from a local environment that is local to that person and also listen, via audio rendering, to audio from a remote environment that is remote to that person.

In some situations it can be desirable for a first person to be in two-way audio communication with a second person for example a telephone call. It may be desirable for the first person to hear audio from the environment that is local to the first person and also hear audio from the environment that is remote to the first person but local to the second person. It may be desirable for the second person to hear audio from the environment local to the second person and also hear audio from the environment that is remote to the second person but local to the first person.

### BRIEF SUMMARY

According to various, but not necessarily all, examples there is provided an apparatus comprising means for:
controlling rendering of first environmental audio captured from an environment of a first user to a second user in dependence upon second environmental audio that is being captured from an environment of the second user.

In some but not necessarily all examples, the apparatus comprises means for:
performing analysis of audio content of the first environmental audio captured from the environment of the first user;
performing analysis of audio content of the second environmental audio that is being captured from the environment of the second user;
controlling rendering of first environmental audio in dependence upon the analysis of the first environmental audio content and the analysis of the second environmental audio content.

In some but not necessarily all examples, control rendering of first environmental audio captured from an environment of a first user to a second user in dependence upon second environmental audio that is being captured from an environment of the second user comprises:
modifying the first environmental audio in time domain and/or frequency domain.

In some but not necessarily all examples, means for modifying the first environmental audio in frequency domain comprises a frequency dependent filter and/or means for applying a frequency shift.

In some but not necessarily all examples, means for modifying the first environmental audio in time domain comprises means for modifying the first environmental audio, or selected frequency bins of the first environmental audio, in the time domain using reverberation and/or modifying the first environmental audio, or selected frequency bins of the first environmental audio, in time domain using vibrato and/or tremolo of the first environmental audio or selected frequency bins of the first environmental audio.

In some but not necessarily all examples, the first environmental audio is spatial audio comprising first sound sources rendered at specific positions or directions, wherein the control of rendering of the first environmental audio captured from the environment of the first user to the second user in dependence upon the second environmental audio that is being captured from the environment of the second user comprises:
modifying the first environmental audio without changing positions or directions at which the first sound sources are rendered.

In some but not necessarily all examples, the apparatus comprises means for separating the first environmental audio into different audio sources to form spatial audio streams associated with different audio sources, wherein the control of rendering of the first environmental audio captured from the environment of the first user to the second user in dependence upon the second environmental audio that is being captured from the environment of the second user comprises:
selectively modifying the spatial audio streams wherein different modification, optionally including no modification, is applied to different spatial audio streams.

In some but not necessarily all examples, the apparatus comprises means for determining a similarity measure between the first environmental audio and the second environmental audio, and for modifying the first environmental audio to decrease the similarity measure.

In some but not necessarily all examples, the determination of the similarity measure is based on one or more of:
time-domain analysis of content of first environmental audio and/or second environmental audio;
frequency-domain analysis of content of first environmental audio and/or second environmental audio;
voice or noise recognition or identification based on analysis of content of first environmental audio and/or content of the second environmental audio;
familiarity based on analysis of content of historical first environmental audio and/or second environmental audio;
visual analysis of an environment from which the first environmental audio is captured and/or of an environment from which the second environmental audio is captured;
location or change in location of an environment from which the first environmental audio is captured and/or of an environment from which the second environmental audio is captured; time of day of capturing the first environmental audio and/or the second environmental audio; connectedness of an apparatus used to capture the first environmental audio and/or the second environmental audio.

In some but not necessarily all examples, the apparatus comprises means for:
classifying the first environmental audio to obtain at least a first class;
classifying the second environmental audio to obtain at least a second class;
performing comparison of at least the first class and the second class to determine similarity between the first class and the second class;
conditionally modifying the first environmental audio in dependence upon the determined similarity between the first class and the second class.

In some but not necessarily all examples, the apparatus is configured as a headset.

In some but not necessarily all examples, the apparatus is configured as a server.

According to various, but not necessarily all, examples there is provided a system comprising:
a first binaural headset in a first environment configured to capture first environmental audio from the first environment and to render the first environmental audio and second environmental audio from a second environment;
a second binaural headset in a second environment configured to capture second environmental audio from the second environment and to render the second environmental audio and the first environmental audio;
a server comprising means for controlling rendering of the first environmental audio at the second binaural headset in dependence upon the second environmental audio and means for controlling rendering of the second environmental audio at the first binaural headset in dependence upon the first environmental audio.

According to various, but not necessarily all, examples there is provided a method comprising:
controlling rendering of first environmental audio captured from an environment of a first user to a second user in dependence upon second environmental audio that is being captured from an environment of the second user.

According to various, but not necessarily all, examples there is provided a computer program comprising program instructions for causing an apparatus to perform at least the following: controlling rendering of first environmental audio captured from an environment of a first user to a second user in dependence upon second environmental audio that is being captured from an environment of the second user.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG 1 illustrates an example of an apparatus for controlling rendering of first environmental audio captured from a first environment to a second user in a second environment, in dependence upon second environmental audio that is being captured from the second environment;
FIG 2 illustrates an example of an apparatus for modifying first environmental audio captured from a first environment to a second user in a second environment, in dependence upon second environmental audio that is being captured from the second environment;
FIG 3 illustrates an example of how first environmental audio can be modified in the frequency domain;
FIG 4 illustrates an example of the apparatus implemented in a headset;
FIG 5 illustrates an example of the apparatus implemented in a server for headsets or other devices;
FIG 6 illustrates another example of the apparatus implemented in a server for headsets or other devices;
FIG 7 illustrates an example of the apparatus implemented in a server that uses classification and class comparisons;
FIG 8 illustrates an example of the apparatus implemented in a headset that uses classification and class comparisons;
FIG 9 illustrates an example of a method for controlling rendering of first environmental audio captured from a first environment to a second user in a second environment, in dependence upon second environmental audio that is being captured from the second environment;
FIG 10 illustrates an example of a controller for the apparatus;
FIG 11 illustrates an example of a computer program for the controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

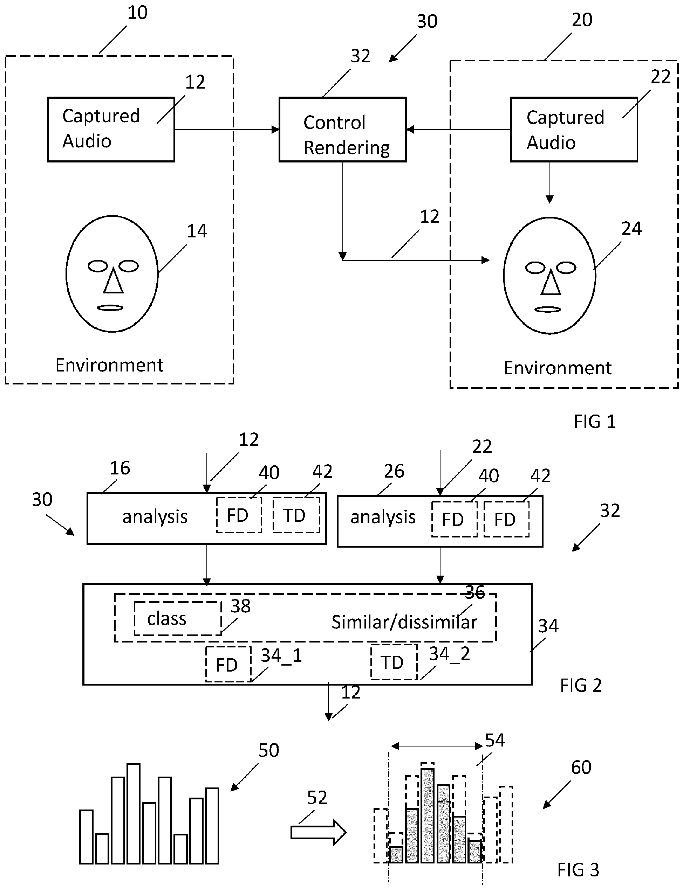

FIG 1 illustrates an example of an apparatus 30 comprising means for controlling rendering 32 of first environmental audio 12 captured from an environment 10 of a first user 14 to a second user 24 in dependence upon second environmental audio 22 that is being captured from an environment 20 of the second user 24.

The apparatus 30 controls rendering of first environmental audio 12 to a second user 24. The control is dependent upon second environmental audio 22. The first environmental audio 12 is captured from an environment 10 of a first user 14. The second environmental audio 22 is being captured from an environment 20 of the second user 24.

In some but not necessarily all examples, the captured first environmental audio 12 and the captured second environmental audio 22 are captured contemporaneously, for example simultaneously. For example, in some but not necessarily all examples, the captured first environmental audio 12 and the captured second environmental audio 22 are live audio.

Environmental audio 12, 22 is audio that can be captured by one or more environmental microphones at or near the respective user 14, 24. The environment is the surroundings of the respective user, that is the space around the user.

The apparatus 30 enables communication between remote user 14, 24. The first environment 10 of the first user 14 is therefore separate from and distinct from the second environment 20 of the second user 24. The sound field associated with the first environment 10 and the sound field associated with the second environment are therefore independent. The first environmental audio 12 is captured independently from the second environmental audio 22.

In some examples, the second user 24 is exposed to the second environment 20 and hears, directly, the second environmental audio 22 that is being captured from the second environment 20 occupied by the second user 24. The first environmental audio 12 is rendered to the second user 24, for example, using speakers or via leaky headphones.

In some examples, the second user 24 is wearing headphones and is isolated from the second environment 20. The second user 24 does not hear or does not hear clearly the second environmental audio 22 directly because of the isolation. However, the headphones are operable in a 'hear-through' mode and the second environmental audio 22 that is being captured from the second environment 20 occupied by the second user 24 is rendered to the second user 24 via the headphones. The first environmental audio 12 is also rendered to the second user 24 via the headphones.

In this example, the apparatus 30 comprises means for controlling rendering 32 of first environmental audio 12 captured from an environment 10 of a first user 14 to a second user 24 in dependence upon second environmental audio 22 that is being captured from an environment 20 of the second user 24 and being rendered to the second user 24.

In the examples described, the control 32 of the rendering of first environmental audio 12 captured from the first environment 10 to the second user 24 in dependence upon the second environmental audio 22 improves user-disambiguation of the first environmental audio 12 rendered to the second user 24 from the second environmental audio 22 that is heard by (in at least some examples rendered to) the second user 24.

FIG 2 illustrates an example of the apparatus 30 comprising means 32 for controlling rendering.

The apparatus 30 is configured to perform analysis 16 of audio content of the first environmental audio 12 captured from the environment 10 of the first user 14 and perform analysis 26 of audio content of the second environmental audio 22 that is being captured from the environment 20 of the second user 24.

The apparatus 30 is configured to control rendering 32 of first environmental audio 12 in dependence upon the analysis 16 of the content of the first environmental audio 12 and the analysis 26 of the content of the second environmental audio 22. For example, the apparatus 30 is configured to modify 34 the first environmental audio 12 that is rendered in dependence upon the analysis 16 of the content of the first environmental audio 12 and the analysis 26 of the content of the second environmental audio 22.

The analysis 16, 26 of audio content comprises analysis of features of the audio that are renderable.

The modification 34 of the first environmental audio 12 modifies audio content and comprises modification of features of the audio that are renderable.

In some but not necessarily all examples, the modification 34 of the first environmental audio 12 comprises modifying the first environmental audio 12 in the time domain and/or in the frequency domain. Time domain modification 34_2 modifies temporal features of the audio; frequency domain modification 34_1 modifies spectral features of the audio.

In some examples, for example, as illustrated in FIG 3, the modification 34 uses a frequency dependent filter (function) to modify 34_1 the first environmental audio 12. The frequency dependent filter provides frequency dependent gain. The gain can be positive and provide amplification or the gain can be negative and provide attenuation.

In some examples, the frequency dependent filter 52 is configured as a bandpass filter. A bandpass filter (or notch filter) is characterised by strong frequency-independent attenuation outside the passband frequencies 54. It can also be characterised by low frequency-independent constant attenuation inside the passband frequencies 54.

In some examples, the frequency dependent filter 52 is configured to attenuate the first environmental audio 12 for frequencies below 150Hz and for frequencies above 4Khz. These frequency limits are indicative and not intended to be exact. Attenuating frequencies below (approximately) 150Hz and above (approximately) 4Khz makes the audio narrowband. The narrowband version of the first environmental audio 12 is easier to distinguish from the second environmental audio 22 originating from user's own environment 20.

In some examples, for example, as illustrated in FIG 3, the frequency dependent filter 52 provides different gains to different frequencies. In the example illustrated, the original frequency spectrum 50 of the first environmental audio 12 is modified to a new frequency spectrum 60. The frequency-dependent filter provides different gains to different selected frequency ranges- each frequency bin, or each frequency bin in a selected sub-set of the frequency bins, can have a different gain. The gain can be positive (amplification) or negative (attenuation).

The frequency dependent filter 52 can therefore be used to change a tone (regularity of vibration) of the the first environmental audio 12.

The frequency dependent filter 52 can therefore be used to change timbre/ color (the mixture of frequencies including the fundamental pitch) of the the first environmental audio 12.

The frequency dependent filter 52 can therefore be used to change harmonic content (the number and relative intensity of the upper harmonics present) of the the first environmental audio 12.

In some examples, the frequency domain modification 34_1 of the the first environmental audio 12 comprises a frequency domain shift, that is a change in pitch.

In some but not necessarily all examples, the time domain modification 34_2 of the
first environmental audio 12 comprises adding reverberation to the
first environmental audio 12 or selected frequency bins of the first environmental audio 12. Reverberation can be achieved by repeating the first environmental audio 12 with different random delays, for example. This can be used to add a room effect such as a small echo.

Additionally or alternatively, in some but not necessarily all examples, the time domain modification 34_2 of the first environmental audio 12 comprises adding vibrato (time-variable frequency modulation) and/or tremolo (time-variable amplitude modulation) to the first environmental audio 12 or selected frequency bins of the first environmental audio 12.

In at least some examples, the captured first environmental audio 12 is spatial audio comprising first sound sources rendered at specific positions or directions. The captured second environmental audio 22 is also spatial audio comprising second sound sources rendered at specific positions or directions. The control 32 of rendering of first environmental audio 12 to the second user 24 in dependence upon second environmental audio 22 can comprise modification 34 of the first environmental audio 12 without changing positions (or directions) at which the first sound sources are rendered. This maintains a realistic spatial distribution of audio sources.

In at least some examples, the apparatus 30 is configured to separate the first environmental audio 12 with respect to different audio sources to form audio streams associated with the different respective audio sources.

The first environmental audio 12 can therefore be considered to be a collection of different audio streams, and each audio stream can be associated with a particular audio source or spatial direction.

The analysis and modification described with respect to the first environmental audio 12 can be performed separately on one or more of the different audio streams. Therefore, in at least some examples, the control 32 of the rendering of the first environmental audio 12 to the second user 24 in dependence upon second environmental audio 22 comprises selectively modifying the spatial audio streams wherein different modification, optionally including no modification, is applied to different audio streams.

The separation of the first environmental audio 12 into different audio streams can be based on spatial audio data, for example spatial channel information or metadata, identifying positions (or directions) of different audio sources and the audio associated with those sources. It is therefore possible to modify the first environmental audio 12 only in certain directions.

The separation of the first environmental audio 12 into different audio streams can be based on audio separation analysis

The decision of whether or not to modify 34 the first environmental audio 12 can be based on a similarity measure between first environmental audio 12 and second environmental audio 22. The similarity measure can for example be determined 36 based on the analysis 16, 26.

In the example illustrated in FIG 2, the apparatus 30 is configured to determine 36 a similarity measure between first environmental audio 12 and second environmental audio 22. If the similarity measure exceeds a threshold, the apparatus 30 is configured to modify 34 the first environmental audio 12 to decrease the similarity measure below that threshold or another threshold. If the similarity measure does not exceed the threshold, the apparatus 30 is configured to not modify 34 the first environmental audio 12 to decrease the similarity measure.

Thus, the modification 34 can change the first environmental audio 12 from being similar to the second environmental audio 22 to being dissimilar to the second environmental audio 22.

Before applying an effect to modify 34 the first environmental audio 12, it is possible to analyze the the first environmental audio 12 and the second environmental audio 22 and check if there is a particular 'resident' effect (e.g. echo or some other room effect characteristics) in the the second environmental audio 22. The effect applied to the first environmental audio 12 to disambiguate it from the first environmental audio 12 can be selected such that it is not the 'resident' effect.

It is also possible to modify sounds only in certain directions, for example sounds originating from left are modified if there is risk of confusion for sounds on the left-hand side. In this case spatial analysis of the sound source directions is needed for the first environmental audio 12 and the second environmental audio 22.

The determination 36 of a similarity measure can, for example, be based on one or more parameters based on one or more of:
time-domain analysis 42 of content of environmental audio 12, 22;
frequency-domain analysis 40 of content of environmental audio 12, 22;
voice or noise recognition or identification based on analysis of content of environmental audio 12, 22;
familiarity determination based on analysis of content of historical environmental audio 12, 22;
visual analysis of an environment from which the environmental audio 22 is captured; location or change in location of the environment 10, 20 from which the environmental audio 12, 22 is captured;
time of day of capturing the environmental audio 12, 22;
connectedness of an apparatus used to capture environmental audio 12, 22.

The connectedness of an apparatus can identify an environment. For example, if an audio capturing apparatus is connected to a car's audio system via Bluetooth, the environment of the captured audio can be identified as a car with a high degree of certainty.

The determination 36 of a similarity measure can, for example, take into account familiarity of sound and/or recognizability of sound and/or identifiability of sound. Familiarity is determined on repetition of exposure to a sound. Recognizability of a sound can be based on a generic classifier trained on public data. Identifiability of a sound can be based on a personal classifier trained on private labelled data.

A user has a higher threshold for similarity between first environmental audio 12 and second environmental audio 22 if one or both of the first environmental audio 12 and second environmental audio 22 is familiar to the user, and/or recognizable and/or identifiable, for example, is a familiar or recognizable or identifiable sound or person's voice.

The determination 36 of a similarity measure can, for example, take into account location. The threshold for similarity can for example be adjusted based on estimation of the environments 10, 20, which can for example be based on time of day and/or location.

In some examples, the frequency-domain analysis 40 uses one or more of the following parameters: Mel-Frequency Cepstral Coefficients (MFCC), spectral centroid, spectral spread, bandwidth. In some examples, the time-domain analysis 42 can uses zero-crossing rate (ZCR) as a parameter.

In some but not necessarily all examples, a similarity between the first environmental audio 12 and second environmental audio 22 is determined using classification 38. In the example illustrated in FIG 2, the apparatus 30 is configured to classify 38 first environmental audio 12 and classify 38 second environmental audio 22 and then perform a class comparison to determine a similarity of class. A similarity between classes can be determined, for example, by reference to a lookup table or using machine learning.

In some but not necessarily all examples, the classification 38 and/or the similarity determination can be performed using deterministic functions or logic.

In some but not necessarily all examples, the classification 38 and/or the similarity determination can be performed using machine learning. Example of machine learning include but are not limited to clustering, k-Nearest Neighbor (kNN), Self-Organizing Map (SOM) or Support Vector Machine (SVM), and convolutional Neural Networks (CNN).

For example, a CNN can be trained to classify parameterized versions of the first environmental audio 12. The same or different CNN can be trained to classify parameterized versions of the second environmental audio 22.

The training can be supervised learning based on labelled training data. Suitable labels (classes) include:
Quiet environment (such as home)
Restaurant, cafeteria
Traffic (pedestrian/cyclist)
In a vehicle (car, bus etc.)
Office
Nature
Crowd
Audience (concert, theatre, sport etc.)

Multi-label classification can be used.

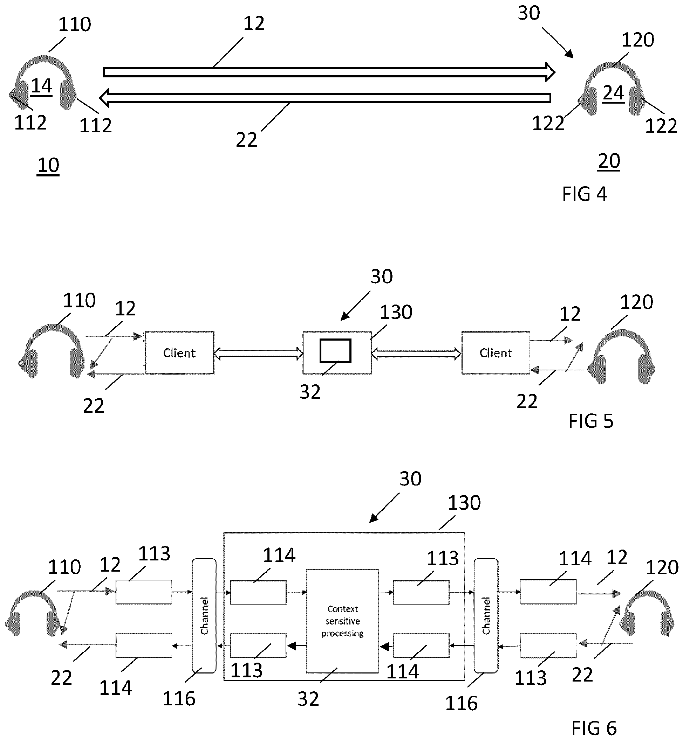

FIG 4 illustrates an example of the apparatus 30 when it is part of a headset 120 of the second user 24. The headset 120 can, for example, comprise one or more external microphones 122 for capturing the second environmental audio 22. In this example, the second environmental audio 22 is rendered to the second user 24 and is also transferred to headset 110 to be rendered to the first user 14.

The headset 110 can, for example, comprise one or more external microphones 112 for capturing the first environmental audio 12. In this example, the first environmental audio 12 is rendered to the first user 14 and is also transferred to headset 120 to be rendered to the second user 24.

While the above description focuses on the rendering of modified first environmental audio 12 to the second user 24 to mitigate confusion of the second user 24, it is of course also possible to render modified second environmental audio 22 to the first user 14 to mitigate confusion of the first user 14.

In some examples, the headset 120 is a binaural headset that has at least left and right external microphones 122 for capturing spatial audio from the second environment 20. The second environmental audio 22 is captured as spatial audio.

In some examples, the headset 110 is a binaural headset that has at least left and right external microphones 112 for capturing spatial audio from the first environment 10. The first environmental audio 12 is captured as spatial audio.

FIG 5 illustrates an example of the apparatus 30 when it is part of a server 130 positioned between the headset 110 of the first user 14 and the headset 120 of the second user 24.

The headset 110 can, for example, comprise one or more external microphones 112 for capturing the first environmental audio 12. In this example, the first environmental audio 12 is rendered to the first user 14 and is also transferred to headset 120 via the server 130 to be rendered to the second user 24. The server 130 is configured to control 32 the rendering of the first environmental audio 12 to the second user 24 via the headset 120 as previously described. For example, the server 130 can modify 34 the first environmental audio 12 rendered to the second user 24.

The headset 120 can, for example, comprise one or more external microphones 122 for capturing the second environmental audio 22. In this example, the second environmental audio 22 is rendered to the second user 24 and is also transferred to headset 110 via the server 130 to be rendered to the first user 14.

While the above description focuses on the rendering of modified first environmental audio 12 to the second user 24 to mitigate confusion of the second user 24, it is of course also possible to render modified second environmental audio 22 to the first user 14 to mitigate confusion of the first user 14. The server 130 can therefore be configured to control 32 the rendering of the second environmental audio 22 to the first user 14 via the headset 110 as previously described. For example, the server 130 can modify 34 the second environmental audio 22 rendered to the first user 14.

In some examples, the headset 120 is a binaural headset that has at least left and right external microphones 122 for capturing spatial audio from the second environment 20. The second environmental audio 22 is captured as spatial audio.

In some examples, the headset 110 is a binaural headset that has at least left and right external microphones 112 for capturing spatial audio from the first environment 10. The first environmental audio 12 is captured as spatial audio.

While the examples illustrated in FIGs 4 and 5 use an audio rendering apparatus (headphones 110, 120) to capture the first environmental audio 12 and second environmental audio 22 it is possible to use other apparatus such as microphone arrays to capture environmental audio.

In some situations it can be desirable for the first user 14 and the second user 24 to be in two-way voice communication for example a telephone call. In those circumstances, the voice of the second user 24 can in some examples be included in the second environmental audio 22. However, in other examples, there is a dedicated voice microphone for the second user 24 that creates a voice channel that is sent to the first user 14. The second user's voice channel can remain unmodified or can also be modified to improve audibility and reduce confusion as described above. The voice of the first user 14 can in some examples be included in the first environmental audio 12. However, in other examples, there is a dedicated voice microphone for the first user 14 that creates a voice channel that is sent to the second user 24. The first user's voice channel can remain unmodified or can also be modified to improve audibility and reduce confusion as described above.

In the following, the first environmental audio 12 and first environment 10 is described as 'local' with respect to the first user 14 and is described as 'remote' with respect to the second user 24 and second environment 20. Furthermore, the second environmental audio 22 and second environment 20 is described as 'local' with respect to the second user 24 and is described as 'remote' with respect to the first user 14 and the first environment 10.

Binaural headsets 110, 120 with external microphones 112, 122 at both ears allow capturing the audio environment 10, 20 around the user 14, 24 realistically and the audio environment 10, 20 can be delivered to the other remote user 24, 14. This greatly increases the immersion of the communication and enables sharing audio experiences. The immersion experience can be even further enhanced by headset 110, 120 with headtracking support.

With hear-through functionality in the headset 110, 120, users 14, 24 are able to hear both their own audio environment 10, 20 and other user's remote audio environment 20, 10 on top of each other. This is practical if the user 14, 24 wants to hear also his/her own audio environment 10, 20.

When wearing binaural headset 110, 120 with hear-through functionality, people will not always be able to distinguish which sounds are originating from their own local environment 10, 20 and which ones are from the other remote environment 20, 10. As long as audio environments 10, 20 are clearly different, e.g. one person is in a concert and other is at home, this is typically not a problem. However, when audio environments 10, 20 are similar there are problems, such as without looking it is not clear if somebody local is trying to talk to you, it is not clear if a local car is approaching you or a remote car is approaching the remote other person, it is not clear if a local dog is barking at you or a remote dog is barking at the remote other person etc. Such situations can result in confusing, embarrassing or even dangerous situations when a person reacts or does not react to audio correctly. This is valid especially for sound sources which are not on person's field of view.

FIG 6 presents a block diagram of a communication system with binaural headsets 110, 120 at both ends. A user device (e.g. headset 110, 120) is a client which captures two channel audio. Audio signal is delivered to server and further to other user's client for playback.

Binaural headset 110, 120 with external microphones 112, 122 at both ears enable capturing audio in binaural format such that the remote person can hear the local audio environment as if being present. As an alternative it is also possible to record audio with multiple microphones for example in a mobile device and convert audio into binaural format using spatial analysis and binaural synthesis.

In this system audio is encoded 113 (compressed) before delivery through the channel 116, and decoded 114 (decompressed) after delivery through the channel 116.

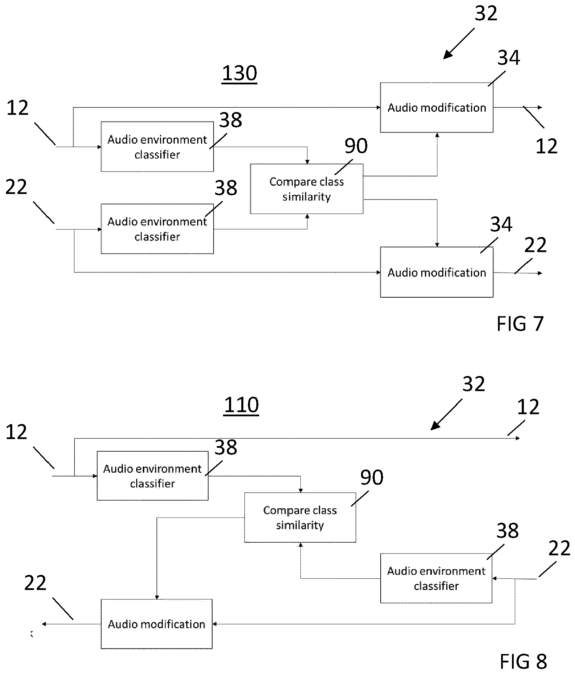

FIG 7 presents in more detail the operation of the context sensitive processing (control 32 of rendering) as a part of the server 130. Processing includes audio classification 38, class comparison 90 and audio modification 34. In the server implementation environmental audio 12, 22 from both sources (e.g. headset 110, 120) can be modified 34, if necessary.
FIG 8 illustrates an example in which the context sensitive processing (control 32 of rendering) is part of a headset 110 (or headset 120). The audio modifications 34 is performed on the client side, not the server. In this case, only downlink remote environmental audio is modified 34.

It is also possible to perform the classification 38 for the environmental audio 12, 22 in the local client and then deliver the classification information to the server 130 or remote client as metadata which is included in the audio bit stream.

The environmental audio 12, 22 is analyzed and classified into one (or more) classes. The number of classes may vary depending on application, but for example following classes can be used:
- Quiet environment (such as home)
- Restaurant, cafeteria
- Traffic (pedestrian/cyclist)
- In a vehicle (car, bus etc.)
- Office
- Nature
- Crowd
- Audience (concert, theatre, sport etc.)

The classification can be performed with machine learning algorithms, such as k-Nearest Neighbor (kNN), Self-Organizing Map (SOM) or Support Vector Machine (SVM). Typically, audio features, such as Mel-Frequency Cepstral Coefficients (MFCC), spectral centroid, spectral spread, bandwidth and zero-crossing rate (ZCR), are extracted from the input audio signals, which are then used for classification instead of the original input signals. Deep learning-based classifiers can be used for the classification task such as a Convolutional Neural Network.

A table can be generated that records how likely there is a risk of confusion considering the classification of the first environmental audio 12 and the second environmental audio 22. The probability is higher if the environments 10, 20 are similar. **Error! Reference source not found.** provides an example how the high confusion risk cases can be classified. High risk of confusion for local user is denoted with "X".

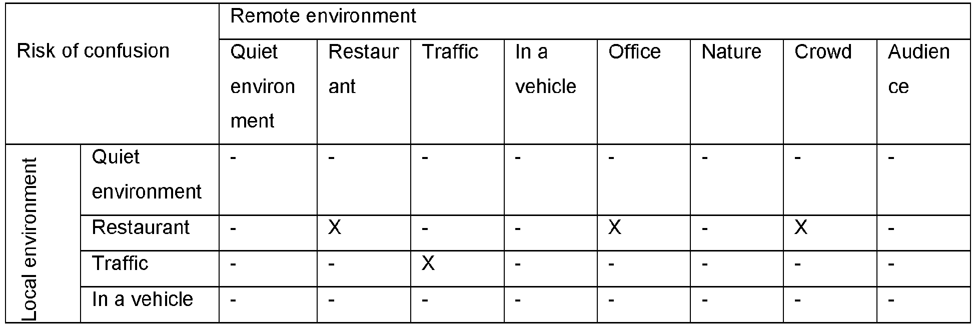

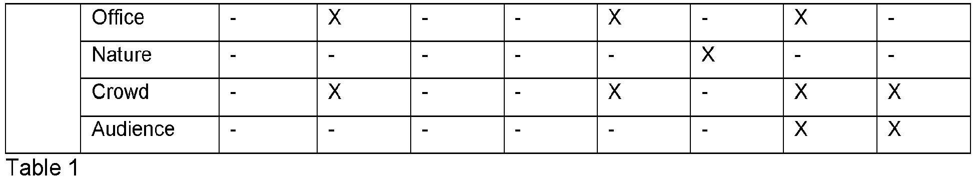

If the system recognizes a high risk of confusion, the remote environmental audio is modified. There are different alternatives to how modification 34 can be implemented:
A bandwidth of the remote environmental audio can be modified using band pass filtering. For example by attenuating frequencies below 150Hz and above 4Khz, the remote environmental audio will sound more like traditional narrowband phone call which is easy to distinguish from local environmental audio signal originating from the user's own environment
An audio effect can be added to the remote environmental audio. For example the tone or color of the remote environmental audio can be modified. Alternatively also a room effect such as a small echo can be added.

In some examples, certain sounds, such as speech signals in the remote environmental audio are modified 34. This can be done by applying sound separation and then the effect (audio effect or filtering) is applied only to some of the separated sounds.

In all the above solutions spatial properties of the remote environmental audio are maintained, i.e. they can be heard from their original directions.

The environment analysis may be continuous i.e. the analysis is done continuously and classification is updated whenever necessary.

There are several possible embodiments:
**Error! Reference source not found.** provides classification of confusion risk only on On/Off scale. It is possible to define more accurate probabilities for confusion for each combination, and this can steer (control) the strength of audio modification. i.e. if the probability of confusion is for example 0.1, only very mild modification is done for the remote environmental audio.

Environment analysis can be also more intelligent. User identification is one concrete example. When the persons speaking are familiar to the user, it usually is also known if those persons are located locally or remotely. Thus for those persons there typically is no risk of confusion. On the other hand, depending on user's locations non-familiar persons may appear at both the remote and the local end and then there exists a risk of confusion. In some examples, modification 34 of the remote environmental audio is limited to non-familiar persons only.

Environment analysis can support multi-label classification, such that more than one environment type is classified for either the remote end or the local end, or both ends, of the call. This would affect the confusion probabilities accordingly, such that the highest risk of confusion would occur when both ends have the same single environment classified, whereas the risk would decrease if differing environment types were classified simultaneously.

In addition to audio it is possible to use also other data, such as time and location. These can be used to learn probabilities of different classes and thus to improve or complement classification performance.

In some examples, it is possible to modify sounds only in certain directions, for example sounds originating from left are modified if there is risk of confusion for sounds on the left-hand side. In this case spatial analysis of the sound source directions is needed for the first environmental audio 12 and the second environmental audio 22.

In some use cases, visual information is available. In those cases it is possible to perform visual analysis of the environment and utilize it as a part of classification information.

Other sensors, for example sensors in a mobile device can be utilized as well. For example if a device is connected to a car's audio system with Bluetooth, it is easy to classify that user is in the car. Motion sensor and or satellite location (e.g. GPS) can be used to identify that user is moving etc.

Before applying an effect to modify 34 remote environmental audio it is possible to analyze the local and remote audio environments and check if there is echo or some other room effect characteristics in the local environment. The effect can be selected such that it does not bring similar properties to the remote environmental audio.

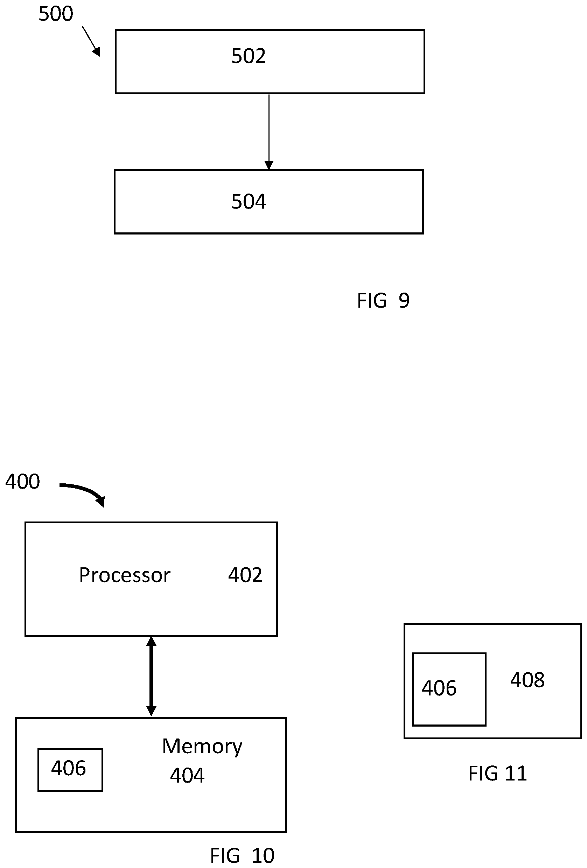

FIG 9 illustrates an example of a method 500. The method 500 comprises at block 504 controlling rendering of first environmental audio 12 captured from an environment 10 of a first user 14 to a second user 24 in dependence upon second environmental audio 22 that is being captured from an environment 20 of the second user 24.

Optionally, the method 500 comprises at block 502 performing analysis of audio content of the first environmental audio 12 captured from the environment 10 of the first user 14 and performing analysis 26 of audio content of the second environmental audio 22 that is being captured from the environment 20 of the second user 24.

The method at block 504 then controls rendering 32 of the first environmental audio 12 in dependence upon the analysis 16 of the content of the first environmental audio 12 and the analysis 26 of the content of the second environmental audio 22. For example, the method modifies the first environmental audio 12 that is rendered in dependence upon the analysis of the content of the first environmental audio 12 and the analysis of the content of the second environmental audio 22.

Fig 10 illustrates an example of a controller 400 suitable for use in an apparatus 30. Implementation of a controller 400 may be as controller circuitry. The controller 400 may be implemented in hardware alone, have certain aspects in software including firmware alone or can be a combination of hardware and software (including firmware).

As illustrated in Fig 10 the controller 400 may be implemented using instructions that enable hardware functionality, for example, by using executable instructions of a computer program 406 in a general-purpose or special-purpose processor 402 that may be stored on a computer readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 30 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 30 comprises:
at least one processor 402; and
at least one memory 404 including computer program code
the at least one memory 404 and the computer program code configured to, with the at least one processor 402, cause the apparatus 30 at least to perform:
   controlling rendering of first environmental audio 12 captured from an environment 10 of a first user 14 to a second user 24 in dependence upon second environmental audio 22 that is being captured from an environment 20 of the second user 24.

The apparatus 30 comprises:
at least one processor 402; and
at least one memory 404 including computer program code,
the at least one memory storing instructions that, when executed by the at least one processor 402, cause the apparatus at least to:
   Controlling rendering of first environmental audio 12 captured from an environment 10 of a first user 14 to a second user 24 in dependence upon second environmental audio 22 that is being captured from an environment 20 of the second user 24.
As illustrated in Fig 11, the computer program 406 may arrive at the apparatus 30 via any suitable delivery mechanism 408. The delivery mechanism 408 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 30 may propagate or transmit the computer program 406 as a computer data signal.

Computer program instructions for causing an apparatus to perform at least the following or for performing at least the following:
controlling rendering of first environmental audio 12 captured from an environment 10 of a first user 14 to a second user 24 in dependence upon second environmental audio 22 that is being captured from an environment 20 of the second user 24.

The computer program instructions may be comprised in a computer program, a non-transitory computer readable medium, a computer program product, a machine-readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.
   This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

As used here 'module' refers to a unit or apparatus that excludes certain parts/components that would be added by an end manufacturer or a user. The apparatus 30 can be a module.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
controlling rendering of first environmental audio captured from an environment of a first user to a second user in dependence upon second environmental audio that is being captured from an environment of the second user.

2. An apparatus as claimed in claim 1, comprising means for:
performing analysis of audio content of the first environmental audio captured from the environment of the first user;
performing analysis of audio content of the second environmental audio that is being captured from the environment of the second user;
controlling rendering of first environmental audio in dependence upon the analysis of the first environmental audio content and the analysis of the second environmental audio content.

3. An apparatus as claimed in claim 1 or 2, wherein control rendering of first environmental audio captured from an environment of a first user to a second user in dependence upon second environmental audio that is being captured from an environment of the second user comprises:
modifying the first environmental audio in time domain and/or frequency domain.

4. An apparatus as claimed in claim 3, wherein means for modifying the first environmental audio in frequency domain comprises a frequency dependent filter and/or means for applying a frequency shift.

5. An apparatus as claimed in claim 3 or 4, wherein means for modifying the first environmental audio in time domain comprises means for modifying the first environmental audio, or selected frequency bins of the first environmental audio, in the time domain using reverberation and/or modifying the first environmental audio, or selected frequency bins of the first environmental audio, in time domain using vibrato and/or tremolo of the first environmental audio or selected frequency bins of the first environmental audio.

6. An apparatus as claimed in any preceding claim, wherein the first environmental audio is spatial audio comprising first sound sources rendered at specific positions or directions, wherein the control of rendering of the first environmental audio captured from the environment of the first user to the second user in dependence upon the second environmental audio that is being captured from the environment of the second user comprises:
modifying the first environmental audio without changing positions or directions at which the first sound sources are rendered.

7. An apparatus as claimed in any preceding claim, comprising means for separating the first environmental audio into different audio sources to form spatial audio streams associated with different audio sources, wherein the control of rendering of the first environmental audio captured from the environment of the first user to the second user in dependence upon the second environmental audio that is being captured from the environment of the second user comprises:
selectively modifying the spatial audio streams wherein different modification, optionally including no modification, is applied to different spatial audio streams.

8. An apparatus as claimed in any preceding claim, comprising means for determining a similarity measure between the first environmental audio and the second environmental audio, and for modifying the first environmental audio to decrease the similarity measure.

9. An apparatus as claimed in claim 8, wherein the determination of the similarity measure is based on one or more of:
time-domain analysis of content of first environmental audio and second environmental audio;
frequency-domain analysis of content of first environmental audio and second environmental audio;
voice or noise recognition or identification based on analysis of content of first environmental audio and/or content of the second environmental audio;
familiarity based on analysis of content of historical first environmental audio and/or second environmental audio;
visual analysis of an environment from which the first environmental audio is captured and/or of an environment from which the second environmental audio is captured;
location or change in location of an environment from which the first environmental audio is captured and/or of an environment from which the second environmental audio is captured; time of day of capturing the first environmental audio and/or the second environmental audio; connectedness of an apparatus used to capture the first environmental audio and/or the second environmental audio.

10. An apparatus as claimed in any preceding claim, comprising means for:
classifying the first environmental audio to obtain at least a first class;
classifying the second environmental audio to obtain at least a second class;
performing comparison of at least the first class and the second class to determine similarity between the first class and the second class;
conditionally modifying the first environmental audio in dependence upon the determined similarity between the first class and the second class.

11. An apparatus as claimed in any preceding claim, configured as a headset.

12. An apparatus as claimed in any of claims 1 to 10, configured as a server.

13. A system comprising:
a first binaural headset in a first environment configured to capture first environmental audio from the first environment and to render the first environmental audio and second environmental audio from a second environment;
a second binaural headset in a second environment configured to capture second environmental audio from the second environment and to render the second environmental audio and the first environmental audio;
a server comprising means for controlling rendering of the first environmental audio at the second binaural headset in dependence upon the second environmental audio and means for controlling rendering of the second environmental audio at the first binaural headset in dependence upon the first environmental audio.

14. A method comprising:
controlling rendering of first environmental audio captured from an environment of a first user to a second user in dependence upon second environmental audio that is being captured from an environment of the second user.

15. A computer program comprising program instructions for causing an apparatus to perform at least the following:
controlling rendering of first environmental audio captured from an environment of a first user to a second user in dependence upon second environmental audio that is being captured from an environment of the second user.
